# EUROPEAN PATENT APPLICATION

(11) **EP 4 773 473 A1**
(43) Date of publication of application: **08.07.2026**
(21) Application number: 24859155.4
(22) Date of filing: 03.07.2024
(51) Int. Cl.: H02J 50/80, H02J 7/00, H02J 50/10

(54) **POWER RECEPTION DEVICE, POWER TRANSMISSION DEVICE, METHOD EXECUTED BY POWER RECEPTION DEVICE, METHOD EXECUTED BY POWER TRANSMISSION DEVICE, AND PROGRAM**

(30) Priority: 29.08.2023 JP 2023139196
(71) Applicant: Canon Kabushiki Kaisha, Tokyo 146-8501 (JP)
(72) Inventor: MIZUMORI, Ryuta, Tokyo 146-8501 (JP)
(74) Representative: Canon Europe Limited
(86) International application number: PCT/JP2024/024033
(87) International publication number: WO 2025/047110

(57) **Abstract**

A power reception device 101 wirelessly receives power from a power transmission device 102. The power reception device detects a near field communication (NFC) tag (S502 and S516) and reads one or more pieces of tag data from the detected NFC tag. Also, the power reception device executes a process by selecting a processing method related to the one or more pieces of tag data in accordance with whether or not the reading means has read the tag data in a state in which the power reception device can receive the power from the power transmission device (from S503 or S517).

## Description

### [Technical Field]

The present disclosure relates to wireless power transmission technologies.

### [Background Art]

In recent years, technological development of wireless power transmission systems has become widespread. Technologies of the wireless power transmission systems generally conform to a standard (Wireless Power Consortium (WPC) standard) established as a wireless charging standard by WPC that is a standardization organization.

Meanwhile, an NFC standard is known as a standard for short-range wireless communication. NFC stands for Near Field Communication. In the NFC standard, polling refers to the transmission of a message for detecting a device serving as a communication partner by transmitting a carrier wave and modulating the carrier wave. The polling is transmitted by a device equipped with an NFC-standard reader/writer function. Moreover, a device that receives polling transmitted by a reader/writer and responds to this polling by applying load modulation to the carrier wave transmitted by the reader/writer is referred to as an NFC tag.

Information exchanged in the NFC standard conforms to a data format known as an NFC data exchange format (NDEF). A plurality of pieces of NDEF information can be set in a single tag, and a reading device can read the plurality of pieces of NDEF information set in the NFC tag from the NFC tag in single NFC communication. How the read NDEF information is processed is left to the device, and some devices process only first NDEF information among the plurality of pieces of NDEF information that have been read.

In Patent Literature 1, technology in which a power reception device having WPC and NFC functions disables its NFC function when a power transmission device has been detected during contactless charging is disclosed. Thereby, the power transmission device can transmit high-output power without damaging the NFC tag.

Moreover, in Patent Literature 2, technology in which a power reception device performs NFC tag detection and notifies a power transmission device of a detection result in the power reception device having an NFC tag detection function if the power transmission device does not have the NFC tag detection function is disclosed. When the power reception device has detected an NFC tag, the power transmission device either stops power transmission or performs power transmission at low power by limiting a maximum value of the power transmission to a predetermined value or less so that damage to the NFC tag is minimized.

### [Citation List]

### [Patent Document]

[Patent Literature 1]
   Japanese Patent Laid-Open No. 2020-089134
[Patent Literature 2]
   Japanese Patent Laid-Open No. 2020-182355

### [Summary of Invention]

### [Technical Problem]

When a power reception device has read tag data from an NFC tag of a power transmission device or from an NFC tag arranged near the power transmission device, it is desirable to perform an appropriate process to protect the NFC tag. However, a case where the power reception device reads tag data of an NFC tag in a state in which the power reception device does not receive power from the power transmission device or cannot receive the power therefrom is also conceivable. In this case, there is room for consideration of how the power reception device or the like handles the tag data.

The present disclosure provides technology in which an appropriate process can be performed when tag data has been read from an NFC tag.

### [Solution to Problem]

According to an aspect of the present disclosure, there is provided a power reception device for wirelessly receiving power from a power transmission device, the power reception device including: a detection means configured to detect a near field communication (NFC) tag; a reading means configured to read one or more pieces of tag data from the detected NFC tag; and a processing means configured to execute a process by selecting a processing method related to the one or more pieces of tag data in accordance with whether or not the reading means has read the tag data in a state in which the power reception device can receive the power from the power transmission device.

### [Advantageous Effects of Invention]

According to the present disclosure, it is possible to perform an appropriate process when tag data is read from an NFC tag.

### [Brief Description of Drawings]

FIG. 1 is a diagram showing an example of a configuration of a wireless power transmission system according to a first embodiment.
FIG. 2 is a block diagram showing an example of a configuration of a power reception device according to an embodiment.
FIG. 3 is a block diagram showing an example of a configuration of a power transmission device according to an embodiment.
FIG. 4 is a flowchart showing a process performed by a power reception device according to an embodiment.
FIG. 5 is a part of a flowchart showing a required power value decision process mainly performed by the power reception device in the first embodiment.
FIG. 6 is a flowchart continuing from FIG. 5.
FIG. 7 is a sequence diagram showing a process performed by the power reception device and the power transmission device according to the first embodiment.
FIG. 8 is a diagram showing NDEF information stored in an NFC tag.
FIG. 9 is a diagram showing an example of a configuration of a wireless power transmission system according to a second embodiment.
FIG. 10 is a flowchart showing a process for detecting a plurality of NFC tags in the second embodiment.
FIG. 11 is a part of a flowchart showing a required power value decision process mainly performed by a power reception device in the second embodiment.
FIG. 12 is a flowchart continuing from FIG. 11.
FIG. 13 is a sequence diagram showing a process performed by the power reception device and a power transmission device in the second embodiment.
FIG. 14 is a diagram showing NDEF information stored in another NFC tag.

### [Description of Embodiments]

Embodiments of the present disclosure will be described in detail below with reference to the accompanying drawings. In addition, not all of a plurality of features of the embodiments of the present disclosure are essential to the present disclosure, and the plurality of features may be combined arbitrarily. In the drawings, the same reference signs are used to denote identical or similar constituent elements, thereby avoiding redundant description.

### [First embodiment]

### <Configuration of system>

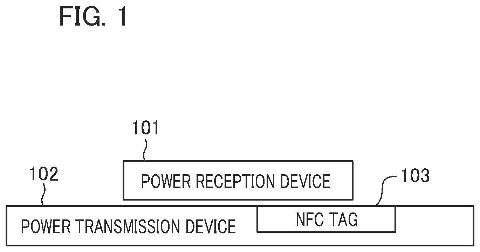

FIG. 1 is a diagram showing an example of a configuration of a wireless power transmission system according to an embodiment. The example of the configuration of the wireless power transmission system according to the embodiment will be described. In the example, the wireless power transmission system is configured to include a power reception device 101 and a power transmission device 102. In order to simplify the notation below, the power transmission device 102 may be referred to as TX and the power reception device 101 may be referred to as RX.

The RX is, for example, an electronic device that receives power from the TX and charges its built-in battery. Moreover, the RX includes a Wireless Power Consortium (WPC) function compliant with a WPC standard and also supports a device authentication protocol of the standard. Moreover, the RX includes a near field communication (NFC) function. By using this function, the RX can operate, for example, in a card-emulation mode, enabling electronic money payments and the like. Moreover, the RX includes an NFC function in which a reading process can be performed on an NFC tag (another device) 103 by performing NFC communication when an operation is performed in a reader/writer mode.

The TX is, for example, an electronic device that wirelessly transmits power to the RX placed on its own device. The TX wirelessly transmits power to the RX via a power transmission coil. Moreover, the TX includes an NFC function in which the NFC tag 103 can be read by performing NFC communication when an operation is performed in the reader/writer mode. By using this function, the TX can detect an NFC device and, for example, can stop or limit power transmission so that the NFC tag 103 is protected. The NFC tag 103 is an example of a device that operates without a battery and enables near-field wireless communication. More specifically, the NFC tag 103 refers to an NFC/radio frequency identifier (RFID) tag capable of NFC communication, an NFC communication device operating in the card emulation mode, or the like.

Generally, there may be a power transmission device that has an NFC tag with NFC data exchange format (NDEF) information corresponding to additional information or services set for the purpose of providing additional information or services to a power reception device. When a battery-free NFC tag is exposed to the high-power electromagnetic field generated by the power transmission process, there is a possibility that an antenna element of the NFC tag and the like may be damaged. The NFC tag is configured to be resistant to damage when power is transmitted at a certain output level or less and NDEF information can be set to indicate that the NFC tag is resistant to damage when power is transmitted at a certain output level or less. Thereby, the power reception device can perform a process such as displaying a UI for utilizing additional information and services or the like, and cause the power transmission device to execute an appropriate power transmission process. For example, when the power reception device reads a plurality of pieces of NDEF information, it is necessary to perform an appropriate process in relation to the NDEF information.

The NFC tag 103 is, for example, built into the TX. When the NFC tag 103 is an external device for the TX, it may be attached to the surface of the TX or arranged near the TX.

Although a case where a smartphone is used as an example of the RX and a charger is used as an example of the TX, the present disclosure is not limited thereto. The RX and the TX may be built into other devices (cameras, smartphones, tablet PCs, laptops, automobiles, robots, medical equipment, and printers) and configured to supply power to those devices.

It is assumed that this system performs wireless power transmission using an electromagnetic induction scheme for contactless charging based on the WPC standard. That is, the RX and the TX perform wireless power transmission for contactless charging based on the WPC standard between the power reception coil of the RX and the power transmission coil of the TX. In addition, a wireless power transmission scheme (contactless power transmission scheme) is not limited to a scheme defined by the WPC standard, and may also be another electromagnetic induction scheme, a magnetic field resonance scheme, an electric field resonance scheme, a microwave scheme, or a scheme using lasers and the like. Although it is assumed that the wireless power transmission is used for contactless charging in the present embodiment, wireless power transmission may also be performed for purposes other than contactless charging.

In the WPC standard, a magnitude of power guaranteed when the RX receives power from the TX is defined by a value referred to as Guaranteed Load Power (hereinafter referred to as "GP"). The GP indicates the power value guaranteed to be output to a load of the RX, such as a charging circuit, i.e., a load power value (load power) of the RX, even if a positional relationship of the RX and the TX fluctuates and the power transmission efficiency between the power reception coil and the power transmission coil decreases. Moreover, the GP can be a load power level agreed upon through Negotiation between the TX and the RX. For example, when the GP is 15 watts, the TX performs power transmission by performing control so that it is possible to output 15 watts to the load within the RX, even if a positional relationship of the power reception coil and the power transmission coil fluctuates and the power transmission efficiency decreases.

### <Configuration of power reception device>

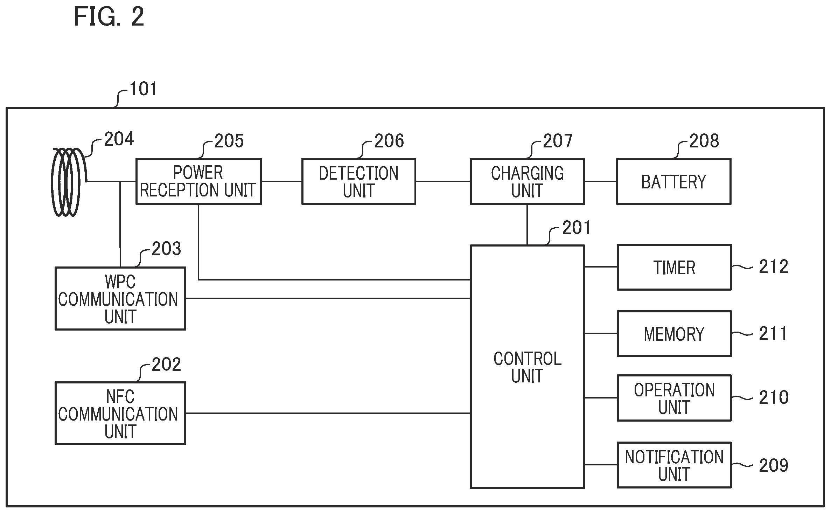

In FIG. 2, an example of a configuration of the RX according to the present embodiment is shown. The RX includes a control unit 201, an NFC communication unit 202, a WPC communication unit 203, a power reception coil 204, a power reception unit 205, a detection unit 206, a charging unit 207, a battery 208, a notification unit 209, an operation unit 210, a memory 211, and a timer 212.

The control unit 201 controls the entire smartphone. An example of the control unit 201 includes a central processing unit (CPU) or a microprocessor unit (MPU). Moreover, the control unit 201 can perform time measurement using the timer 212. For example, the control unit 201 performs control by executing a control program stored in the memory 211. The control unit 201, for example, is configured to include one or more processors, such as a central processing unit (CPU) or a micro processing unit (MPU).

In addition, the control unit 201 may include hardware dedicated to a specific process, such as an application-specific integrated circuit (ASIC). Alternatively, the control unit 201 may be configured to include an array circuit, such as a field programmable gate array (FPGA), compiled to execute a predetermined process. The control unit 201 causes the memory 211 to store information to be stored while various types of processes are being executed.

Although the control unit 201 is shown as a single constituent element in the present embodiment, the present invention is not limited thereto. For example, the WPC control unit, which controls a process related to the reception of power from the power transmission device in the power reception device, may be configured separately from the control unit 201. Alternatively, the NFC control unit, which controls a process related to NFC communication, may be configured separately from the control unit 201. Alternatively, the WPC control unit and the NFC control unit may each be configured separately from the control unit 201. When the control unit 201 is configured as a plurality of separate control units, the control units are connected to each other via a communication interface, enabling data communication. The communication interface may be any interface that implements data communication, such as an inter-integrated circuit (I2C) or general-purpose input/output (GPIO).

The NFC communication unit 202 is a hardware module that implements an NFC function. Specifically, a card emulation mode that serves as a substitute for the role of a contactless IC card, a reader/writer mode for reading the NFC tags 103, and a peer-to-peer (P2P) mode for directly exchanging messages between NFC devices are implemented. For example, the card emulation mode can be used to enable electronic money payments and the like. At least the NFC communication unit 202 functions as a detection unit that detects the NFC tag 103 and as a reading unit that reads one or more pieces of tag data from the detected NFC tag.

In addition, as will be described below, the control unit 201 mainly functions as a processing means that executes a process by selecting a processing method related to one or more pieces of tag data in accordance with whether or not the reading means has read the tag data in a state in which the power reception device can receive the power from the power transmission device.

The WPC communication unit 203 performs wireless power transmission communication based on the WPC standard with the communication unit 306 of the TX. The WPC communication unit 203 demodulates electromagnetic waves input from the power reception coil 204 to acquire information transmitted from the TX, and performs load modulation of the electromagnetic waves to superimpose the information to be transmitted to the TX onto the electromagnetic waves, thereby performing the communication with the TX.

The power reception unit 205 receives, via the power reception coil 204, alternating current (AC) power (AC voltage and AC current) generated by electromagnetic induction based on electromagnetic waves emitted from the power transmission coil of the TX. The power reception unit 205 converts the AC power into direct current (DC) power or AC power of a predetermined frequency and outputs the converted power to the detection unit 206.

The detection unit 206 detects that the RX is placed on the TX based on the WPC standard. For example, the detection unit 206 detects at least one of voltage and current values of the power reception coil 204 when the power reception unit 205 receives a Digital Ping of the WPC standard via the power reception coil 204. The detection unit 206, for example, can determine that the RX has been placed on the TX when the voltage value is below a predetermined voltage threshold or when the current value exceeds a predetermined current threshold.

In the present embodiment, the placement of the RX on the TX means a state in which the RX can receive power from the TX. For example, the TX has a charging stand and the RX can receive power when the RX is placed on the stand. It cannot be said that a state in which the RX is not placed on the stand is a state in which power can be received.

Here, a case where power cannot be necessarily received even if the power reception device is placed on the power transmission device is also conceivable. This can occur, for example, when a cover, case, or other member that blocks or attenuates electromagnetic waves is attached to the power reception device, or when an unintended member that blocks or attenuates electromagnetic waves is located between the power transmission device and the power reception device. In other words, the "state in which the power reception device is placed on the power transmission device" described in the flowcharts and the like of the present embodiment is merely an example of a state in which the power reception device can receive power from the power transmission device.

Moreover, the state in which the power reception device can receive power is not limited to a state in which the power reception device is placed on the power transmission device. For example, the state in which power can be received may be a state in which the power reception device and the power transmission device are in contact or proximity due to mechanical engagement or a state in which the power reception device is in contact with the power transmission device due to a magnetic force.

In the present embodiment, the following description will be given, using a state in which the RX is placed on the TX as a typical example of a state in which the RX can receive power.

The charging unit 207 charges the battery 208 with power supplied from the power reception unit 205. Moreover, the charging unit 207 starts or stops charging the battery 208 based on the control of the control unit 201, and further adjusts the power used to charge the battery 208 based on a charge state of the battery 208. When the power used by the charging unit 207 changes, the power supplied from the power reception unit 205, i.e., the reception power at the RX, also changes in accordance with the change. The charging unit 207 shown here is a load in the RX.

The battery 208 supplies the entire RX with power required for control of each part of the RX by the control unit 201 or for power reception and communication. Moreover, the battery 208 stores the power received via the power reception coil 204.

The notification unit 209 notifies the user of information by any method, such as a visual, audible, or tactile method. For example, the notification unit 209 notifies the user of the charge state of the RX and the state related to power transmission of the wireless power transmission system including the RX and the TX, as shown in FIG. 1. The notification unit 209, for example, is configured to include a liquid crystal display, light-emitting diode (LED), speaker, vibration generation circuit, or other notification devices.

The operation unit 210 has a reception function of receiving an operation on the RX from the user. The operation unit 210 is configured to include, for example, buttons, keyboards, voice input devices such as microphones, motion detection devices such as acceleration sensors and gyro sensors, or other input devices. In addition, a device in which the notification unit 209 and the operation unit 210 are integrated may be used like a touch panel.

As described above, the memory 211 stores various types of information such as identification information and device configuration information, control programs, and the like. In addition, the memory 211 may store information obtained by a functional unit different from the control unit 201.

The timer 212 performs time measurement using, for example, a count-up timer that measures the elapsed time from the time of activation, a count-down timer that counts down from a set time, or the like.

### <Configuration of power transmission device>

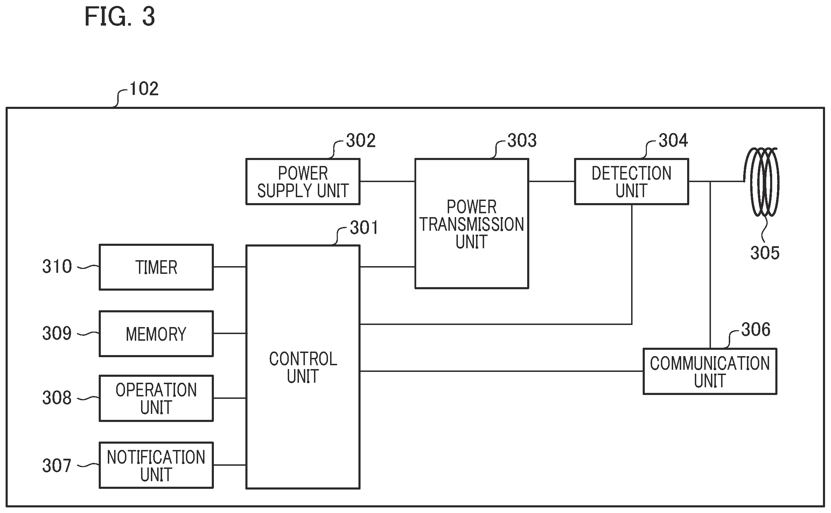

FIG. 3 shows an example of a configuration of the TX according to the present embodiment. The TX includes a control unit 301, a power supply unit 302, a power transmission unit 303, a detection unit 304, a power transmission coil 305, a communication unit 306, a notification unit 307, an operation unit 308, a memory 309, and a timer 310.

The control unit 301 controls the entire TX by, for example, executing a control program stored in the memory 309. That is, the control unit 301 controls the functional units shown in FIG. 3. Moreover, the control unit 301 performs control related to power transmission control in the TX. Moreover, the control unit 301 performs control related to the NFC function of the TX. Furthermore, the control unit 301 may perform control for executing applications other than wireless power transmission. The control unit 301 is configured to include, for example, one or more processors, such as a CPU or an MPU. The control unit 301 may include a single processor, or, as described with reference to FIG. 2, a main control unit for overall control and a sub-control unit for controlling a power transmission process and NFC communication may be implemented by separate processors.

In addition, the control unit 301 may be configured to include dedicated hardware for a specific process, such as an application-specific integrated circuit (ASIC), or an array circuit, such as an FPGA, compiled to execute a predetermined process. The control unit 301 causes information to be stored to be stored in the memory 309 while various types of processes are in execution. Moreover, the control unit 301 may perform time measurement using the timer 310.

The power supply unit 302 supplies the entire TX with power required for the control of the TX by the control unit 301 and for power transmission and communication. The power supply unit 302 is, for example, a commercial power source or a battery. The battery stores power supplied from the commercial power source.

The power transmission unit 303 converts the DC or AC power input from the power supply unit 302 into AC frequency power in the frequency band for use in wireless power transmission, and inputs this AC frequency power to the power transmission coil 305, thereby generating electromagnetic waves for causing the RX to receive power. The frequency of the AC power generated by the power transmission unit 303 is, for example, approximately several hundred kilohertz (kHz) (e.g., 110 kHz to 205 kHz). Based on an instruction of the control unit 301, the power transmission unit 303 inputs the AC frequency power to the power transmission coil 305 so that electromagnetic waves for transmitting power are output from the power transmission coil 305 to the RX.

Moreover, the power transmission unit 303 controls an intensity of the electromagnetic waves to be output by adjusting a voltage (power transmission voltage) or current (power transmission current) input to the power transmission coil 305 or both. The intensity of the electromagnetic waves increases if the power transmission voltage or current increases and the intensity of the electromagnetic waves decreases if the power transmission voltage or current decreases. Moreover, based on an instruction of the control unit 301, the power transmission unit 303 controls the output of AC frequency power so that power transmission from the power transmission coil 305 starts or stops. Furthermore, the power transmission unit 303 is configured so that the control unit 301 can know the transmission power of any timing at that timing by notifying the control unit 301 of the current transmission power. In addition, the measurement of the transmission power and the notification for the control unit 301 may be configured to be performed by a unit other than the power transmission unit 303.

The detection unit 304 detects whether an object has been placed on the TX based on the WPC standard. Specifically, the detection unit 304 detects whether an object has been placed on the Interface Surface of the TX. For example, the detection unit 304 detects at least one of the voltage and current values of the power transmission coil 305 when the power transmission unit 303 transmits an Analog Ping of the WPC standard via the power transmission coil 305.

In addition, the detection unit 304 may detect a change in impedance. Also, the detection unit 304 can determine that the object has been placed on the TX when the voltage falls below a predetermined voltage value or when the current value exceeds a predetermined current value. Whether the object is a power reception device or another foreign object is determined based on whether or not there is a predetermined response with respect to a Digital Ping subsequently transmitted by the communication unit 306. In other words, the object is determined to be the power reception device when the TX has received the predetermined response and the object is determined to be an object other than the power reception device otherwise.

The communication unit 306 performs control communication with the RX based on the WPC standard as described above. The communication unit 306 modulates the electromagnetic waves output from the power transmission coil 305 and transmits information to the RX to perform communication. Moreover, the communication unit 306 demodulates the electromagnetic waves output from the power transmission coil 305 and modulated by the RX to acquire the information transmitted by the RX. In other words, communication performed by the communication unit 306 is carried out through superimposition on the electromagnetic waves transmitted from the power transmission coil 305.

Moreover, the communication unit 306 performs NFC communication and detects the NFC tag 103 of the device transmitting power. In addition, in the communication unit 306, a module for performing control communication based on the WPC standard and a module for performing NFC communication may be implemented by a single piece of hardware or may be implemented by separate pieces of hardware.

The notification unit 307 notifies the user of information by any method, such as a visual, audible, or tactile method. For example, the notification unit 307 notifies the user of information indicating a charge state of the TX or a state related to power transmission of a wireless power transmission system including the TX and the RX as shown in FIG. 1. The notification unit 307 is configured to include, for example, a liquid crystal display, LED, speaker, vibration generation circuit, or other notification devices.

The operation unit 308 has a reception function of receiving an operation on the TX from the user. The operation unit 308 is configured to include, for example, buttons, keyboards, voice input devices such as microphones, motion detection devices such as acceleration sensors and gyro sensors, or other input devices. In addition, a device in which the notification unit 307 and the operation unit 308 are integrated may be used like a touch panel.

The memory 309 stores various types of information such as identification information and capability information, a control program, and the like. Moreover, the capability information includes information indicating whether the device has high-precision foreign object detection capabilities. In addition, the memory 309 may store information obtained by a functional unit other than the control unit 301.

The timer 310 performs time measurement using, for example, a count-up timer that measures the elapsed time from the time of activation, a count-down timer that counts down from a set time, or the like.

### <Process in power reception device>

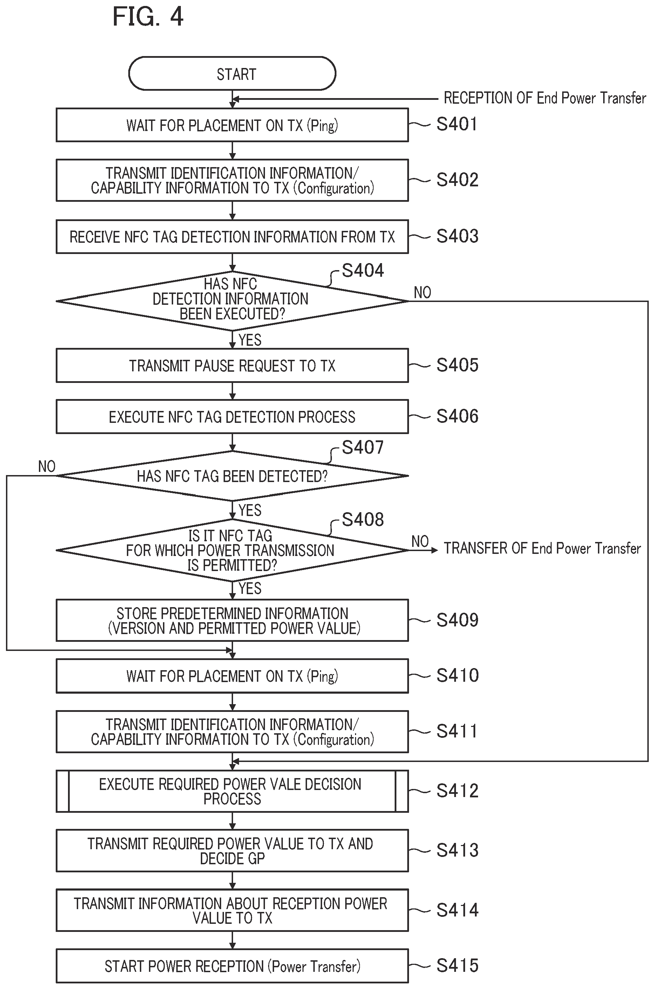

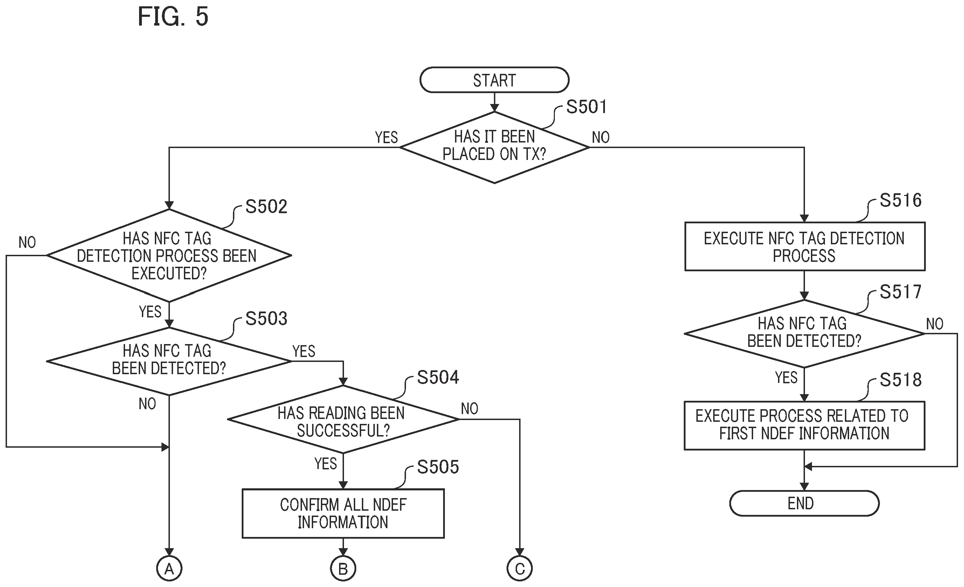

FIG. 4 is a flowchart showing an example of a flow of a process executed by the RX. This process can be implemented, for example, by the control unit 201 of the RX executing a program read from the memory 211. In addition, at least a part of the following procedure may be implemented by hardware. In this case, the hardware can be implemented, for example, using a predetermined compiler to automatically generate a dedicated circuit using a gate array circuit such as an FPGA from a program for implementing each processing step. This is also similar to the process shown in FIGS. 5 to 7 and 10 to 12, which will be described below.

When the user of the RX inputs a contactless charging application start instruction in accordance with a state in which the RX is activated by power supplied from the battery 208 or the TX in accordance with a state in which the RX is powered on, this process may be executed in response to the input. Moreover, this process may be started by some other trigger.

In S401, after the process starts, the RX executes the process defined as the Ping phase of the WPC standard and waits for its own device to be placed on the TX. The RX detects the placement on the TX, for example, by detecting a Digital Ping from the TX. If the RX detects that its own device has been placed on the TX, identification information and capability information of the RX are transmitted to the TX by communication of the Configuration phase defined in the WPC standard in S402.

Here, the identification information of the RX includes a Manufacturer Code and a Basic Device ID. The capability information of the RX includes the following information.
- Information for identifying the supported WPC standard version
- Maximum Power Value (or Reference Power), which is a value for identifying maximum power capable of being supplied by the RX to a load
- Information indicating whether or not a Negotiation function of the WPC standard is provided

However, this information is merely an example, and the identification information and capability information of the RX may be replaced by other information or may further include additional information. For example, the identification information may be any other identification information for identifying an entity of the RX, such as a Wireless Power ID. Moreover, the RX may transmit the identification information and capability information using a method other than communication in the Configuration phase of the WPC standard.

If the identification information and the capability information are transmitted, the RX starts communication in the Negotiation phase defined in the WPC standard. If communication in the Negotiation phase starts, the RX acquires NFC tag detection information from the TX in S403. Here, the NFC tag detection information may include information such as whether or not the TX has an NFC tag detection function, whether or not the NFC tag detection process has been executed, and whether or not an NFC tag has been detected as a result of the NFC tag detection process.

After the acquisition of the NFC tag detection information, the RX determines whether or not to execute the NFC tag detection process in S404. Here, the determination of whether or not to execute the NFC tag detection process is performed based on the NFC tag detection information acquired from the TX. For example, when the TX does not have the NFC tag detection function, or when the TX has the NFC tag detection function but has not yet performed the NFC tag detection, the RX may perform the NFC tag detection process and the like. Moreover, the present invention is not limited to this. When an NFC tag is detected as a result of executing the NFC tag detection in the TX, the RX may also perform the NFC tag detection process to re-confirm whether or not there is an NFC tag. Thereby, it is possible to detect the NFC tag more reliably.

When it is determined to execute the NFC tag detection process (YES in S404), the RX moves the process to S405. On the other hand, when it is determined not to execute the NFC tag detection process (NO in S404), the RX moves the process to S412. In S405, the RX transmits a pause request to the TX, and moves the process to S406. In S406, the RX executes an NFC tag detection process, and moves the process to S407. Here, the NFC tag detection process can be executed sequentially for each tag type (Type-A, Type-B, and Type-F) using a reader/writer function compliant with the NFC standard, but is not limited thereto.

If the NFC tag detection process is executed, the RX determines whether or not an NFC tag has been detected in the NFC tag detection process in S407. The determination of whether the NFC tag has been detected can be made based on whether or not predetermined communication has been performed with the NFC tag using the reader/writer function, whether or not data stored in the NFC tag (tag data) has been successfully read, or the like. The data stored in the NFC tag can be data recorded in the NDEF format defined in the NFC standard. It is only necessary for the data stored in the NFC tag to be in a format that can be recognized by the RX as predetermined data, such as raw data, and the data is not limited thereto.

When it is determined that the NFC tag has been detected (YES in S407), the RX moves the process to S408. On the other hand, when it is determined that an NFC tag has not been detected (NO in S407), the RX moves the process to S410. In S408, the RX determines whether or not the detected NFC tag is an NFC tag that for which power transmission is permitted. Whether the detected NFC tag is an NFC tag that for which power transmission is permitted can be determined by whether or not the tag data read from the NFC tag includes power transmission permission tag data indicating that power transmission is permitted. If the power transmission permission tag data is included, the NFC tag is an NFC tag for which power transmission is permitted. The format of the data indicating that the detected NFC tag is an NFC tag for which power transmission is permitted may be a value, a character string, or the like and is not limited thereto.

When it is determined that the detected NFC tag is an NFC tag for which power transmission is permitted (YES in S408), the RX moves the process to S409. On the other hand, when it is determined that the detected NFC tag is not an NFC tag for which power transmission is permitted (NO in S408), the RX transmits an End Power Transfer (EPT) packet of the WPC standard to the TX and ends the process.

Although the process immediately ends when the detected NFC tag is not an NFC tag for which power transmission is permitted in the present embodiment, the process may not end. In this case, by setting the required power value to be described below to the limited power value, it becomes possible to continue power transmission and reception while preventing damage and heat generation to the NFC tag, thereby implementing a safer and more efficient wireless power transmission system.

In S409, the RX stores predetermined information included in the data stored in the NFC tag for which power transmission is permitted and moves the process to S410. Here, the predetermined information may primarily be a power value at which the NFC tag permits power transmission. The power value at which power transmission is permitted (hereinafter referred to as a permitted power value) may be a power value indicating the tolerance of the NFC tag with respect to the power transmission power of the TX or the power reception power of the RX. Specifically, the power value indicating NFC tolerance may be a power value corresponding to the required power value for Negotiable Load Power to be described below or Guaranteed Load Power to be described below. The permitted power value is one piece of information included in the power transmission permission tag data.

In addition to the permitted power value, the predetermined information may also include a Qi standard version in the WPC standard, information about a version of NFC supported by the NFC tag, a version of a protection function, and the like. Information about a version of NFC supported by the NFC tag may include, for example, the NFC-related standard version established by an NFC Forum, which is an NFC standardization organization, Type-A/B/F information, and the like.

Subsequently, in S410, the RX re-executes a process defined as the Ping phase of the WPC standard and waits for its own device to be placed on the TX. When it is detected that the RX has been placed on the TX, the RX transmits identification information and capability information to the TX via communication of the Configuration phase defined in the WPC standard in S411 and moves the process to S412. In S412, the RX executes a process for deciding the required power value. The process for deciding the required power value will be described below.

In S413, the RX transmits the required power value (a required value for transmission power) decided in S412 to the TX, and decides a GP value with the TK. If the RX decides the GP, the RX transmits information about a predetermined reception power value to the TX so that a relationship of reception power to transmission power in a state in which there is no foreign object is derived in S414. Here, the information about the predetermined reception power value includes the reception power value in a light load state/Light Load and the reception power value in a maximum load/Connected Load state. If information about the reception power value is transmitted, the RX starts power reception according to communication in the Power Transfer phase defined in the WPC standard in S415. Thereafter, when an error occurs or a state of the battery reaches a state of full charge, the RX transmits an EPT packet according to the WPC standard. Thereby, power transmission from the TX is stopped and the series of processes for contactless charging ends.

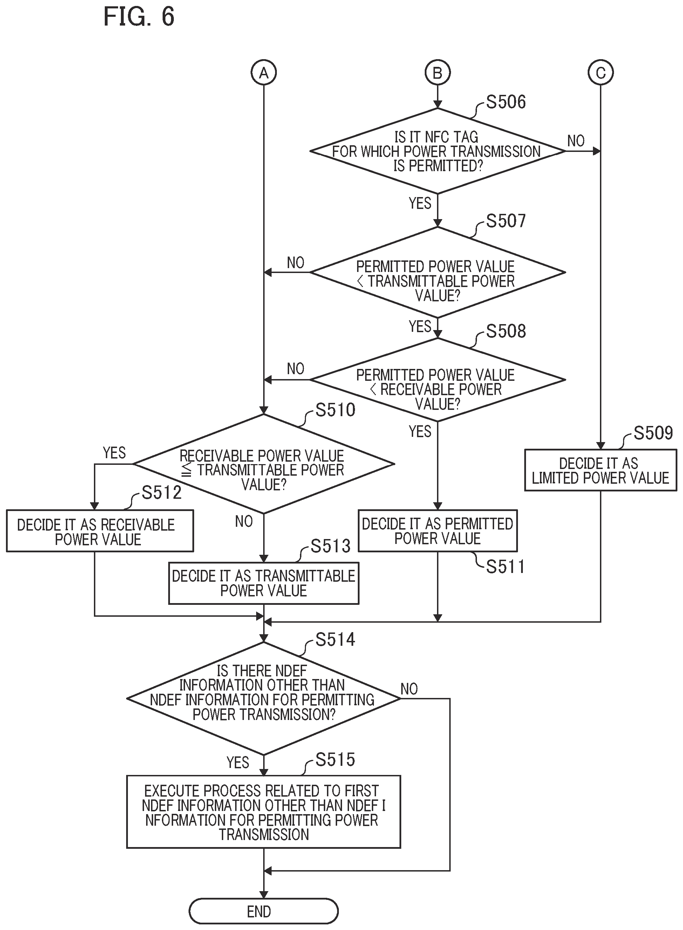

FIGS. 5 and 6 are a flowchart primarily showing a process for deciding the required power value executed by the RX in S412. Moreover, FIGS. 5 and 6 show an example in which the RX executes a process by selecting a processing method related to tag data (NDEF information here) read from the NFC tag in accordance with whether or not the RX is placed on the TX. The required power value is power information transmitted to the TX in negotiation with the TX in the Negotiation phase.

As triggered by the start of the process, the RX determines whether or not it has been placed on the TX (S501). Whether or not the RX has been placed on the TX can be determined by whether or not S401 has been completed. When it is determined that the RX has been placed on the TX (YES in S501), the RX moves to S502 as a process related to the NDEF information including a process for deciding the required power value in wireless power transmission. On the other hand, when it is determined that the RX has not been placed on the TX (NO in S501), the RX moves to S516 as a process for NDEF information not related to wireless power transmission. That is, the RX executes a process by selecting a processing method related to the one or more pieces of tag data in accordance with whether or not the tag data has been read in a state in which the RX has been placed on the TX.

Processes related to the tag data refer to the following processes performed by the RX. The processes are a process [1] for confirming the presence or absence of specific tag data (e.g., power transmission permission tag data), a process [2] related to power transmission using tag data, and a process [3] based on information content of the tag data, and the like.

The processing method indicates a process (one or more processes) to be executed (or not to be executed) among the processes [1], [2], and [3] and tag data (one or more pieces of tag data) for which a process is performed among a plurality of pieces of tag data with respect to the process [3]. Moreover, the processing method may refer to the order in which the three processes [1], [2], and [3] are executed.

In S502, the RX determines whether or not it has executed the NFC tag detection process. S502 represents the processing of S404. When the NFC tag detection process has been executed (YES in S502), the RX moves the process to S503. On the other hand, when the NFC tag detection process has not been executed (NO in S502), the RX moves the process to S510.

In S503, the RX determines whether or not an NFC tag has been detected in the NFC tag detection process of S406. When it is determined that an NFC tag has been detected (YES in S503), the RX moves the process to S504. On the other hand, when it is determined that an NFC tag has not been detected (NO in S503), the RX moves the process to S510.

In S504, the RX determines whether reading from the NFC tag 103 has been successful. When it is determined that reading has been successful (YES in S504), the RX moves the process to S505. On the other hand, when the RX determines that reading has not been successful (NO in S504), because the RX confirms the presence of an NFC tag but cannot determine whether or not it is a tag for which power transmission is permitted, the protection of the NFC tag is prioritized and the process proceeds to S509.

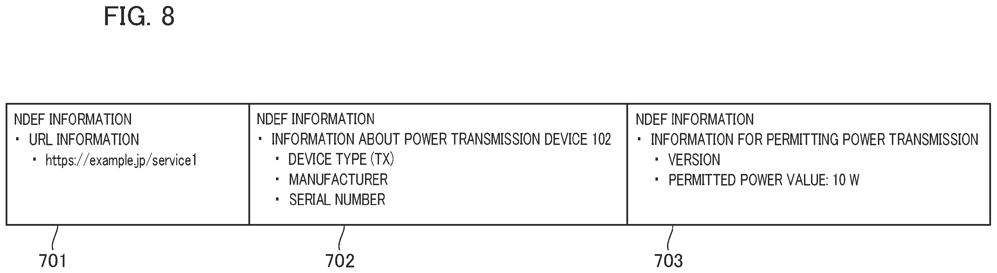

In S505, the RX confirms the NDEF information (e.g., all NDEF information here) read from the NFC tag 103. FIG. 8 is a diagram showing an example of the NDEF information (a plurality of pieces of NDEF information). In the present embodiment, step S505 is the step of analyzing NDEF information 701 to 703 shown in FIG. 8. In the present embodiment, the NFC tag 103 is assumed to be an NFC tag implemented by the TX provider, and has three pieces of NDEF information as an example.

The NDEF information 701 is uniform resource locator (URL) information, and is considered as, for example, a URL related to a service intended to be provided in conjunction with the TX or the like. The NDEF information 702 is considered as information about the TX, device type information (e.g., information indicating the "TX," i.e., the power transmission device), manufacturer information, a serial number, or the like. The NDEF information 703 is information for permitting power transmission, i.e., power transmission permission tag data, and is considered as, for example, a version of wireless power transmission and a permission power value (e.g., 10 W). The NDEF information is not limited to that shown in FIG. 8, various information can be set in accordance with the intended use specified by the provider of the TX.

In the present embodiment, the left side represents first NDEF information, the center represents second NDEF information, and the right side represents third NDEF information. The RX reads the NDEF information in order from the left side. When NDEF information is stored in an NFC tag, it may be stored in association with an ID or number for identifying the NDEF information. In this case, it is only necessary for the RX to read the NDEF information in the order of IDs or numbers.

In S506, the RX determines whether or not the detected NFC tag is an NFC tag for which power transmission is permitted. That is, in S506, the RX confirms whether or not there is NDEF information 703. This process is the above-described process [1] for confirming whether or not there is specific tag data (e.g., power transmission permitted tag data). Moreover, the processing of S506 to S513 is the above-described process [2] related to power transmission using tag data.

When it is determined that the detected NFC tag is an NFC tag for which power transmission is permitted (the NDEF information 703 is present) (YES in S506), the RX moves the process to S507. On the other hand, when it is determined that the detected NFC tag is not an NFC tag for which power transmission is permitted (there is no NDEF information 703) (NO in S506), the RX decides the limited power value as the required power value (S509) and ends a required power value decision process. The limited power value is a value less than or equal to a predetermined value that is sufficiently small to make the likelihood of destruction, heat generation, or the like of the NFC tag low even when the power transmission process is continued. It may be, for example, 5 watts or less, but is not limited to this.

In S507, the RX determines whether or not the permitted power value is smaller than a transmittable power value. The transmittable power value is a Maximum Power Value at which the TX can transmit power at that time, and may be the Negotiable Load Power of the WPC standard. When the permitted power value is smaller than the transmittable power value (YES in S507), the RX moves the process to S508. On the other hand, when the permitted power value is greater than or equal to the transmittable power value (NO in S507), the RX moves the process to S510.

In S508, the RX determines whether or not the permitted power value is smaller than the receivable power value. The receivable power value is the Maximum Power Value at which the RX can receive power at that time, and can be calculated based on an operating state of the RX. Moreover, a maximum receivable power value may be a Maximum Power Value (or Reference Power). In this case, the control unit 201 functions as a calculation means. The operating state of the RX can be determined by, for example, a load, temperature, a coupling coefficient of the transmission and reception coils, or the like, but is not limited to these. When the permitted power value is smaller than the receivable power value (YES in S508), the RX determines the permitted power value as the required power value (S511) and ends a required power value decision process. On the other hand, when the permitted power value is greater than or equal to the receivable power value, the RX moves the process to S510.

In S510, the RX determines whether or not the receivable power value is less than or equal to the transmittable power value. When the receivable power value is less than or equal to the transmittable power value (YES in S510), the RX decides the receivable power value as the required power value (S512) and ends the required power value decision process. On the other hand, when the receivable power value is greater than the transmittable power value (NO in S510), the RX decides the transmittable power value as the required power value (S513) and ends the required power value decision process.

In S514, the RX determines whether or not NDEF information other than NDEF information indicating that power transmission is permitted (e.g., the NDEF information 703) is present in the NDEF information confirmed in S505, i.e., whether or not any unprocessed (unsupported) NDEF information is present. When it is determined that NDEF information other than NDEF information indicating that power transmission is permitted is present (YES in S514), the RX moves the process to S515. On the other hand, when it is determined that NDEF information other than NDEF information indicating that power transmission is permitted is absent (NO in S514), the RX ends the process.

In S515, the RX performs a process on the first NDEF information other than NDEF information indicating that power transmission is permitted. Using the NDEF information in FIG. 8 as an example, this processing corresponds to processing the NDEF information 701. In this example, the RX displays a UI for accessing the URL for a service provided together with the TX on a display unit (not shown) provided in the RX. The processing of S515 is the above-described process [3] based on the information content of the tag data.

In addition, S514 is connected not only from S511 and 509 but also from S512 and 513, but paths of S512 and 513 are paths of NO determination at S503. Therefore, when the process follows the path with the NO determination at S503, S514 will inevitably result in the NO determination and the process will end as it is.

When the determination at S501 is NO, a process in which the RX is not placed on the TX is performed. In this case, because this means that the RX does not involve S406, an NFC tag detection process is first performed at S516. This processing is the same as the processing of S406.

In S517, the RX determines whether or not an NFC tag has been detected during the NFC tag detection process. This processing is the same as the processing of S407. When it is determined that an NFC tag has been detected (YES in S517), the RX moves the process to S518. On the other hand, when it is determined that an NFC tag has not been detected (NO in S517), the RX ends the process. In addition, after S517 and before S518, the determination similar to S504 is performed, but this is omitted here. When the determination is NO, the RX ends the process.

In S518, the RX, for example, executes a process related to the first NDEF information. Using the NDEF information in FIG. 8 as an example, the processing target is NDEF information 701. In this case, the RX displays a UI for accessing the URL of the service provided together with the TX on a display unit (not shown) provided in the RX. In addition, because the processing from S516 is not related to the power transmission process, even if the RX initially reads the NDEF information 703 in S518, it may be simply ignored.

### <Process of entire system>

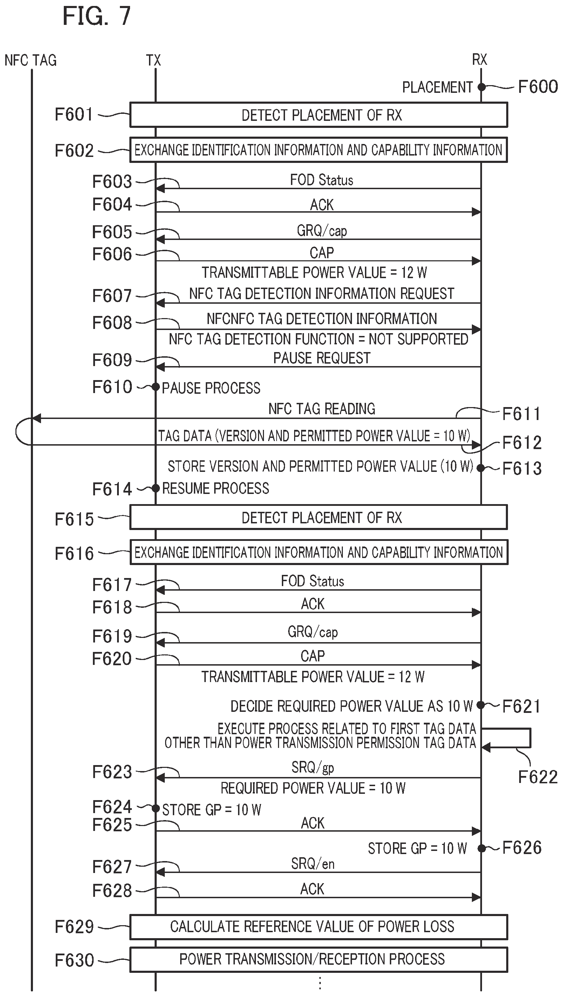

Next, an operation sequence for executing the above-described process in the present embodiment will be described with reference to FIG. 7. An initial state becomes a state in which the RX is not placed on the TX. Moreover, it is assumed that an NFC tag for which power transmission is permitted is built into or attached to the TX, or that an NFC tag is located around the TX and that the RX placed thereon can read data from the NFC tag. Moreover, in the present embodiment, an example in which the permitted power value is 10 watts, the transmittable power value is 12 watts, and the receivable power value is 15 watts will be described.

When the RX detects that it has been placed on the TX, after identification information and capability information are exchanged, communication in the Negotiation phase starts and NFC tag detection information is acquired from the TX. The RX executes an NFC tag detection process based on the acquired NFC tag detection information. At this time, the RX detects an NFC tag, but control for continuing the power transmission process is performed because the detected NFC tag is an NFC tag for which power transmission is permitted. Subsequently, because the comparison of power values shows that the permitted power value < the transmittable power value < the receivable power value as described above, the RX requests the permitted power value as the GP value.

When the RX is placed on the TX in F600, the TX and the RX execute communication in the Ping phase of the WPC standard, and the RX detects that it has been placed on the TX (F601 and S401). Subsequently, in F602, the RX transmits identification information and capability information to the TX according to communication in the Configuration phase of the WPC standard (S402). Subsequently, the TX and the RX start communication in the Negotiation phase of the WPC standard, and the RX transmits a Foreign Object Detection (FOD) Status data packet of the WPC standard to the TX in F603. When the FOD Status data packet is received, the TX determines that there is no foreign object in the present embodiment and transmits an acknowledgement (ACK) in F604.

Subsequently, in F605, the RX transmits a capability information (CAP) notification request to the TX using a General Request (GRQ) data packet of the WPC standard. If the capability information notification request is received, the TX transmits a CAP data packet of the WPC standard to the RX in F606. In addition, the CAP data packet may include the transmittable power value, i.e., Negotiable Load Power.

Subsequently, in F607, the RX transmits a notification request for NFC tag detection information to the TX using a GRQ data packet of the WPC standard. If the notification request for NFC tag detection information is received, the TX transmits the NFC tag detection information to the RX in F608. In addition, the NFC tag detection information may be transmitted using a data packet defined in the WPC standard. Moreover, the NFC tag detection information can include information such as whether or not the TX has an NFC tag detection function, whether or not NFC tag detection has been executed, and whether or not an NFC tag has been detected as a result of NFC tag detection. Hereafter, a case where the TX does not have the NFC tag detection function in the present embodiment will be described.

If the RX receives the NFC tag detection information (S403), because the TX does not have the NFC tag detection function, it is determined (decided) to execute the NFC tag detection process (YES in S404). Also, the RX transmits a pause request to the TX using the GRQ data packet of the WPC standard in F609 (S405). Here, the pause request may include the time the TX will stop the process. Moreover, the pause request may be an EPT packet of the WPC standard, but it may also be made using a different packet. When the pause request is received, the TX pauses the power transmission process in F610.

If the NFC tag detection process starts, the RX reads the NFC tag in F611 (S406) and acquires power transmission permission tag data from the NFC tag in F612 (YES in S407 and YES in S408). Subsequently, in F613, the RX primarily stores the permitted power value as information included in the power transmission permission tag data (S409). The information stored by the RX may be a Qi standard version in the WPC standard, information about an NFC version supported by the NFC tag, and a version of the protection function in addition to the permitted power value. In F614, the TX resumes a power transmission process. Because the processing of F615 to F620 is similar to that of F601 to F606, description thereof will be omitted.

In F621, the RX executes a process for deciding the required power value (S412). The RX detects an NFC tag for which power transmission is permitted (YES in S502, YES in S503, and YES in S504). Because the permitted power value is currently less than the transmittable power value (YES in S507) and less than the receivable power value (YES in S508), the RX decides the required power value of the GP as the permitted power value (S511). Furthermore, in F622, the RX executes a process on the first tag data other than the power transmission permission tag data (S515).

Subsequently, in F623, the RX stores the required power value of the GP in a Specific Request (SRQ) data packet of the WPC standard and transmits the required power value to the TX. When the SRQ data packet, which is the GP's request, is received, the TX receives the required power value because it is less than or equal to its own transmittable power value, and stores it as the GP value in F624. Subsequently, in F625, the TX transmits an ACK to the RX as an acceptance response. If the ACK is received, the RX stores the required power value as the GP value in F626 as if the required power value transmitted in F623 is accepted (S413).

Subsequently, in F627, the RX transmits the Negotiation phase end notification in the SRQ data packet of the WPC standard to the TX. If the Negotiation phase end notification is received, the TX transmits an ACK, which is an acceptance response, to the RX in F628. Subsequently, the RX and the TX calculate a power loss reference value for foreign object detection based on the decided GP value (F629 and S414) and start a power transmission and reception process (F630 and S415).

As described above, the RX detects NFC tags for which power transmission is permitted, and confirms the presence or absence of NDEF information for permitting the power transmission from the read NDEF information when a plurality of pieces of NDEF information are read. When there is NDEF information for permitting power transmission in this case, the RX requests the minimum value of a power value at which the power transmission device can transmit power, a power value at which the power reception device can receive power, and a power value permitted by the NFC tag as the GP value. Thereby, even when an NFC tag capable of transmitting power is located on the TX, it is possible to continue power transmission and reception while suppressing damage and heat generation to the NFC tag and implement a safer and more efficient wireless power transmission system. Moreover, by processing NDEF information other than that for permitting power transmission, the RX can also access services and functions intended to be provided to the RX by the TX. As described above, the RX can perform an appropriate process when reading NDEF information, particularly a plurality of pieces of NDEF information, from the NFC tag.

Although an example in which the RX processes first NDEF information other than the NDEF information for permitting power transmission has been described in the description of the process for the NDEF information in S515 and S518 of FIG. 5 in the present embodiment, the present invention is not limited thereto. For example, the RX can also process second or subsequent pieces of predetermined NDEF information (of a specific number). Alternatively, the RX can sequentially process all target NDEF information or a plurality of pieces of selected NDEF information. In this case, even if the RX reads the NDEF information 703 in S518, it may be simply ignored.

### [Second embodiment]

A second embodiment of the present disclosure will be described in detail below with reference to the accompanying drawings. In the second embodiment, descriptions of configurations and operations similar to those of the first embodiment will be omitted or simplified.

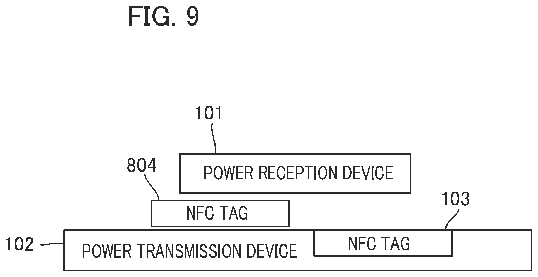

FIG. 9 is a diagram showing an example of a configuration of a wireless power transmission system according to the present embodiment. Because the power reception device 101, the power transmission device 102, and the NFC tag 103 are the same as those in FIG. 1, descriptions thereof will be omitted. In the present embodiment, the power reception device 101 is referred to as the RX, and the power transmission device 102 is referred to as the TX.

An NFC tag 804 is an NFC tag different from the NFC tag 103. FIG. 9 shows a situation in which there are a plurality of NFC tags during NFC tag detection by the RX. The NFC tag 804 is, for example, an NFC tag that is unintentionally placed between the RX and the TX, and may be, for example, an NFC card that supports touch payment, a keychain-type NFC tag, or the like. In the present embodiment, as shown in FIG. 9, the control of the RX for a situation where there are a plurality of NFC tags from the RX's perspective in a wireless power transmission environment between the RX and the TX will be described.

The configuration of the RX in FIG. 2, the configuration of the TX in FIG. 3, and the process executed by the RX during wireless power transmission in FIG. 4 are the same as those in the first embodiment, and therefore will not be described here.

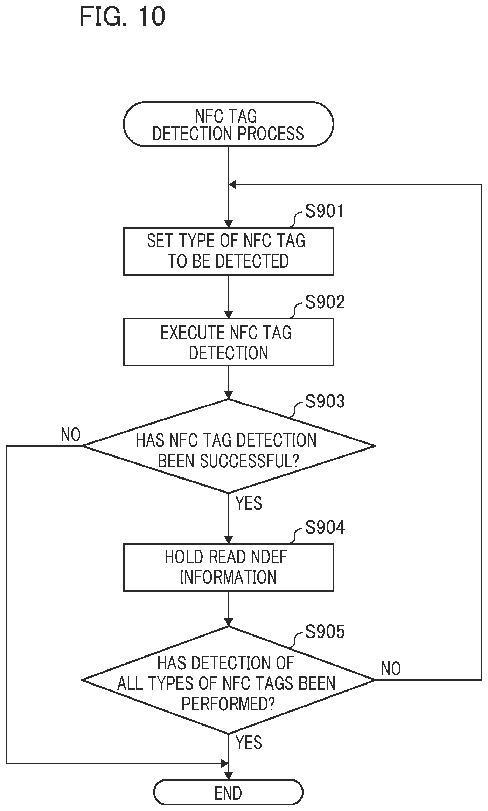

FIG. 10 is a detailed flowchart of the NFC tag detection process executed in S406 in the flowchart of the wireless power transmission shown in FIG. 4 in the present embodiment.

In S901, after the start of the process, the RX sets the type of NFC tag to be detected. There are a plurality of NFC tags, including Type-A, Type-B, and Type-F, and the tag type for which detection has not yet been performed is set. In S902, the RX performs NFC tag detection. This detection can be performed, for example, using a reader/writer function based on the NFC standard. In S903, the RX determines whether or not NFC tag detection has been successful. When it is determined that NFC tag detection has been successful (YES in S903), the RX moves the process to S904. On the other hand, when it is determined that the RX determines that NFC tag detection has failed (NO in S903), the process ends.

In S904, the RX holds the NDEF information read from the NFC tag. The RX manages the read information for each NFC tag for which detection has been performed. In S905, the RX determines whether a detection process has been executed for all types of NFC tags. This is a process for determining whether or not detection has been executed for all types, for example, Type-A, Type-B, and Type-F. When it is determined that detection has been performed for all types (YES in S905), the RX ends the process. On the other hand, when it is determined that detection has not been performed for all types (NO in S905), the RX returns to S901 and performs an NFC tag detection process for the next type.

The above is the NFC tag detection process executed during the wireless power transmission of FIG. 4 in the present embodiment. By executing the detection process for all NFC tag types, the RX can appropriately ascertain the situation to perform a process even when a plurality of NFC tags are present, as shown in FIG. 9. For example, when the NFC tag 103 and the NFC tag 804 are different types of NFC tags, it is possible to read the NDEF information from all tags. Moreover, when the NFC tag 103 and the NFC tag 804 are the same type of NFC tag, the RX can ascertain that at least one NFC tag is present by determining that NFC tag detection has failed in S903.

When there are two or more identical NFC tag types, the RX may include an NFC communication unit that can detect them individually. In this case, it is only necessary for the RX to detect all of the NFC tags according to the flowchart shown in FIG. 10 and read the NDEF information stored in each of the NFC tags.

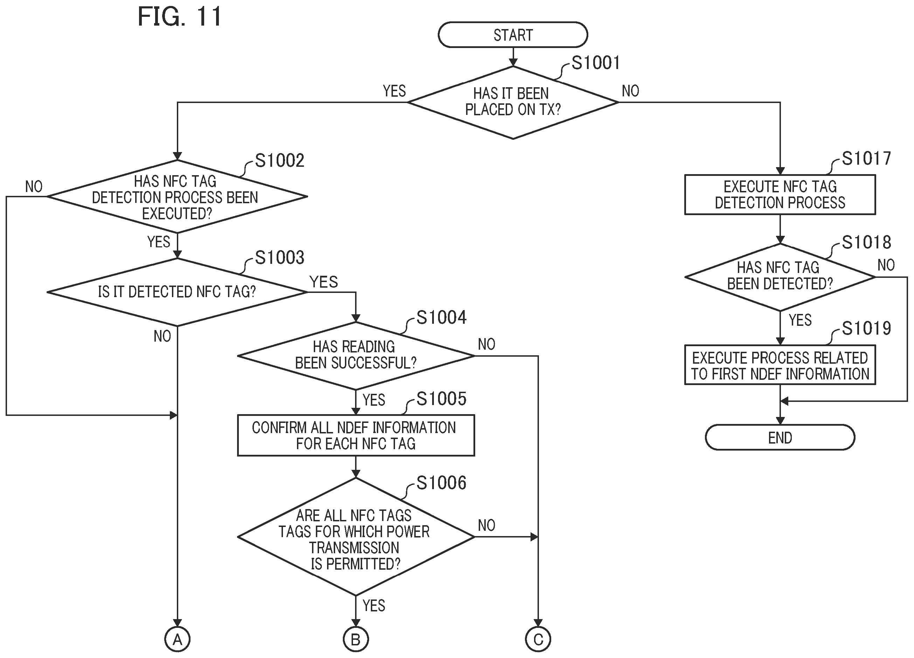

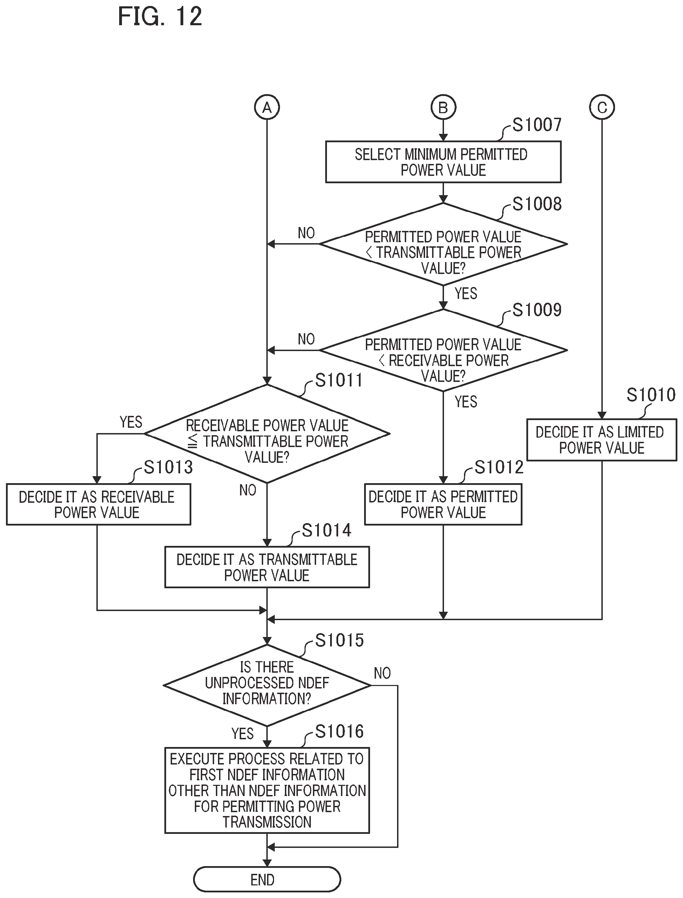

FIGS. 11 and 12 are a flowchart mainly showing a required power value decision process executed by the RX in S412 of FIG. 4. The flowchart of FIGS. 11 and 12 is expanded in correspondence with a case where there are a plurality of NFC tags from the RX's perspective, as shown in FIG. 9, based on the flowchart of FIGS. 5 and 6. Therefore, the descriptions of processing steps overlapping those of FIGS. 5 and 6 will be omitted.

S1001 to S1004 are the same as S501 to S504. In S1005, the RX confirms all NDEF information for each NFC tag. Because the RX executes NFC tag detection for all NFC types in the process of the flowchart of FIG. 10 and holds NDEF information for each detected NFC tag, it is possible to confirm the NDEF information for each NFC tag. In the present embodiment, the RX confirms the NDEF information read from the NFC tag 103 and the NFC tag 804.

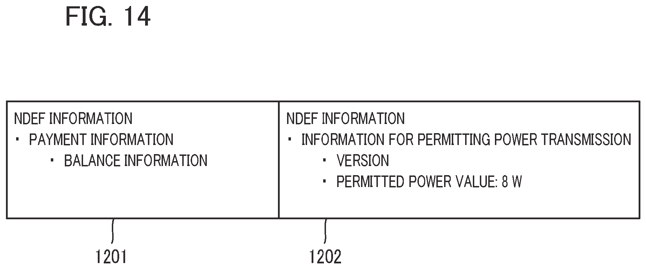

Here, the NDEF information held by the NFC tag 103 is the same as that shown in FIG. 8. Meanwhile, the NDEF information held by the NFC tag 804 is shown in FIG. 14. An NFC tag that supports touch payment, for example, is assumed as the NFC tag 804. An NFC tag that supports touch payment has, for example, payment information in NDEF information 1201 and information for permitting power transmission (power transmission permitted tag data) in NDEF information 1202. The NDEF information of the NFC tag 804 is not limited to that shown in FIG. 14, and various information can be set in accordance with the application of the NFC tag 804.

In S1006, the RX determines whether or not all NFC tags are tags for which power transmission is permitted. When it is determined that all detected NFC tags are NFC tags for which power transmission is permitted (YES in S1006), the RX moves the process to S1007. On the other hand, when it is determined that at least one of the detected NFC tags is not an NFC tag for which power transmission is permitted (NO in S1006), the RX decides the limited power value as the required power value (S1010) and ends the required power value decision process.

In S1007, the RX sets a minimum permitted power value among the permitted power values in the information for permitting power transmission of all NFC tags as the permitted power value for use in subsequent processing. In the present embodiment, this means the use of the permitted power value (e.g., 8 W) in the NDEF information 1202.

The subsequent processing from S1008 to S1015 is the same as the processing from S507 to S514. Here, the "permitted power value" in S1008, S1009, and S1012 refers to the permitted power value selected in S1007.

In S1016, the RX performs a process for first NDEF information within the NDEF information other than the NDEF information for permitting power transmission. When a plurality of NFC tags are detected, processing the first NDEF information other than the NDEF information for permitting power transmission is processing the NDEF information 701 if the NFC tag 103 is detected before the NFC tag 804 in the flowchart of FIG. 10. In other words, this is a process for displaying a UI for accessing a URL to a service provided together with the TX. On the other hand, when the NFC tag 804 is detected before the NFC tag 103, the RX activates an application for processing the payment information of the NDEF information 1201 as a process for the first NDEF information other than the NDEF information for permitting power transmission.

### <Process of entire system>

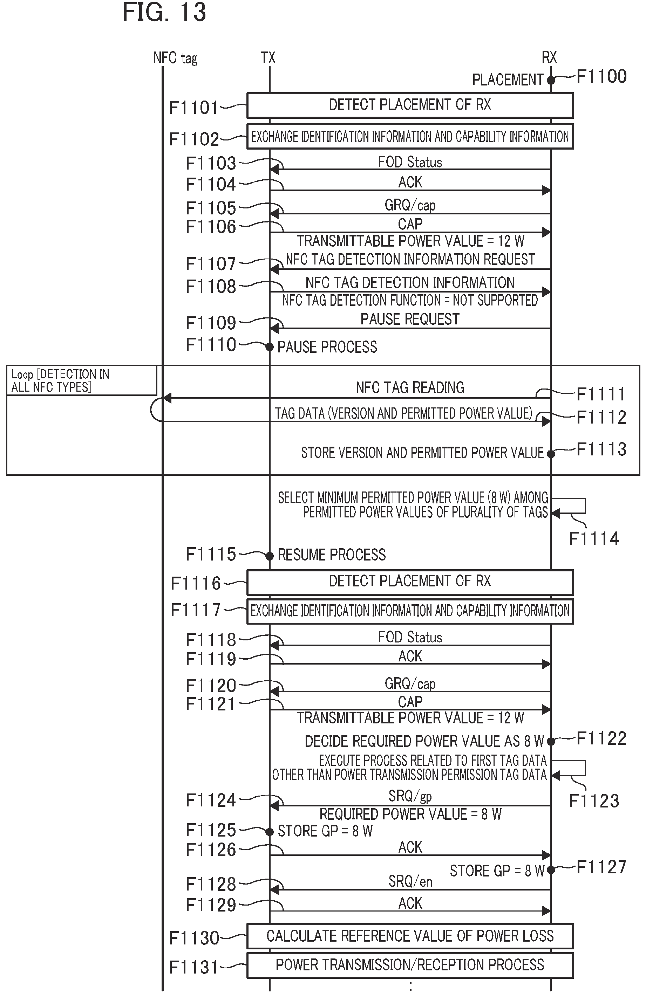

Next, an operation sequence for executing the above-described process in the present embodiment will be described with reference to FIG. 13. The flowchart of FIG. 13 is expanded in correspondence with a case where there are a plurality of NFC tags from the RX's perspective, as shown in FIG. 9, based on the operation sequence of FIG. 7. Therefore, the description of overlapping processing will be omitted.

F1100 to F1110 are the same as F600 to F610. F1111 to F1113 are substantially the same as F611 to F613, and are loop processing executed for all NFC tags (S901 to S905).

F1114 is a process for selecting a minimum permitted power value from the permitted power values in the NDEF information for permitting power transmission obtained from a plurality of NFC tags in the loop processing of F1111 to F1113 (S1007). In the present embodiment, the NDEF information 703 and NDEF information 1202 are processing targets, and 8 W of NDEF information 1202 is selected. The subsequent processing from F1115 to F1131 is the same as F614 to F630.

In the present embodiment, an example in which the first NDEF information other than the NDEF information for permitting power transmission obtained by detecting all tag types in the flowchart in FIG. 10 is processed has been described in the description of S1016 and S1019 of FIGS. 11 and 12. However, the present invention is not limited to this, and the RX can also process, for example, the second or subsequent predetermined NDEF information. Alternatively, control can be performed to process all or multiple pieces of target NDEF information sequentially.

S1016 and S1019 of FIGS. 11 and 12 may be executed only for tag data of a specific NFC tag. The specific NFC tag is, for example, an NFC tag related to the power transmission device. In this case, the RX needs to acquire information about the TX from the NFC tag. In the example shown in FIG. 8, this corresponds to the NDEF information 702 of the NFC tag 103. The RX can recognize the presence of an NFC tag related to the power transmission device by confirming the information about the device type (TX) in the NDEF information 702. Also, the RX can perform control for sequentially processing the first NDEF information or a plurality of pieces of second and subsequent NDEF information (e.g., all second and subsequent NDEF information) other than the NDEF information for permitting power transmission within the NDEF information obtained from the NFC tag 103.

### [Other embodiments]

In the above-described first embodiment, for example, the RX may not execute the processing of S515. A process following YES in S501 is a process under a condition that the RX is placed on the TX. Therefore, the RX can perform control for performing only a process for NDEF information for permitting power transmission in S505 and S506 without performing a process for other NDEF information.

Likewise, in the above-described second embodiment, the RX may not execute the processing of S1016. The process after YES in S1001 is a process under the condition that the RX is placed on the TX. Therefore, the RX can perform control for performing only a process for NDEF information for permitting power transmission in S1005 to S1007 without performing a process for other NDEF information.

In the above-described embodiments, an NFC tag that uses wireless communication defined by the NFC standard is used as an example of a wireless communication tag, but other common radio frequency identifier (RFID) tags and the like may also be used. In this case, the NFC tag can be replaced with an IC tag/card or an RF tag/card or the like.

Although the flowcharts in FIGS. 4 to 6 and 10 to 12 are processes executed by the RX, these processes may also be executed by the power transmission device. In this case, the power transmission device simply needs to include an NFC communication unit similar to that of the RX, in addition to the constituent elements of the TX shown in FIG. 3. The NFC communication unit functions as a detection means for detecting NFC tags and a reading means for reading tag data from detected NFC tags.

Some (or all in some cases) of the constituent elements in the above-described embodiments may be replaced with other constituent elements that perform other similar functions, or may be omitted, or additional constituent elements may be added. Moreover, the present invention is not limited to the WPC standard and can be applied to various standards.

Moreover, the power transmission device and power reception device may be, for example, an image input device such as an imaging device (a still camera, a video camera, or the like) or a scanner, or an image output device such as a printer, a copier, or a projector. Moreover, they may be storage devices such as hard disk drives or memory devices, or information processing devices such as personal computers (PCs), smartphones, or tablet devices.

Moreover, the power reception device of the present disclosure may also be an information terminal device. For example, the information terminal device has a display unit (display) that displays information to a user and receives power supplied from a power reception antenna. In addition, the power received from the power reception antenna is stored in a power storage unit (battery), and the power is supplied from the battery to the display unit. In this case, the power reception device may also have a communication unit that communicates with devices other than the power transmission device. The communication unit may support communication standards such as NFC communication or the fifth-generation mobile communication system (5G).

Moreover, the power reception device of the present disclosure may also be a vehicle such as an automobile. For example, an automobile serving as the power reception device may receive power from a charger (power transmission device) via a power transmission antenna installed in a parking lot. Alternatively, an automobile serving as a power reception device may receive power from a charger (power transmission device) via a power transmission antenna embedded in the road. Such an automobile supplies the received power to a battery. The power of the battery may be supplied to a driving unit (a motor or electric unit) that drives the wheels, or may be used to drive a sensor used for driving assistance or a communication unit that communicates with an external device. In other words, in this case, the power reception device may include, in addition to the wheels, a battery, a motor or sensor that is driven using the received power, and a communication unit that communicates with devices other than the power transmission device. Furthermore, the power reception device may have a housing unit for accommodating a person. For example, the sensor is a sensor used to measure a distance between vehicles or distances from other obstacles or the like. The communication unit may be compatible with, for example, a Global Positioning System (GPS). Furthermore, the communication unit may be compatible with a communication standard such as the fifth-generation mobile communication system (5G). Furthermore, the vehicle may be a bicycle or a motorcycle.

Moreover, the power reception device of the present disclosure may also be an electric tool, a home appliance, or the like. These power reception devices may include a motor that is driven by the received power stored in the battery in addition to the battery. Moreover, these devices may have a notification means for notifying the user of the remaining battery level or the like. Moreover, these devices may have a communication unit for communicating with devices other than the power transmission device. The communication unit may be compatible with communication standards such as NFC or the fifth-generation mobile communication system (5G).

Moreover, the power transmission device of the present disclosure may be an on-board charger that transmits power to mobile information terminal devices such as smartphones and tablets that support wireless power transmission within a vehicle that is an automobile. Such an on-board charger may be located anywhere within the automobile. For example, the on-board charger may be installed in the automobile's console, or may be installed in an instrument panel (an instrument panel or a dashboard), between passenger seats, on the ceiling, or in the door. However, it is best to avoid the installation in a location that interferes with driving. Moreover, while the power transmission device has been described using an example of the on-board charger, such chargers are not limited to those installed in vehicles, they may also be installed on transport vehicles such as trains, aircraft, and watercraft. In this case, the charger may also be installed between passenger seats, on the ceiling, or in the door.

Moreover, a vehicle such as an automobile equipped with an on-board charger may serve as the power transmission device. In this case, the power transmission device has wheels and a battery, and uses battery power to supply power to the power reception device via a power transmission circuit unit and a power transmission antenna.

The present disclosure may also be implemented in a process in which a program that implements one or more functions of the above-described embodiments is supplied to a system or device via a network or a storage medium, and one or more processors in a computer of the system or device read and execute the program. Moreover, it may be implemented by a circuit (e.g., an ASIC) that implements one or more functions.

Moreover, some of the processes described with reference to flowcharts in the present disclosure may be implemented by hardware. For example, it is only necessary for a predetermined compiler to be used to automatically generate dedicated circuits on an FPGA from programs for implementing each step. Moreover, a gate array circuit may be formed like an FPGA and implemented as hardware.

The present disclosure has been described in detail above based on preferred embodiments thereof, but the present disclosure is not limited to the above embodiments. Various modifications are possible based on the spirit of the present disclosure and are not excluded from the scope of the present disclosure.

### (Cross-Reference to Related Application)

This application claims the benefit of Japanese Patent Application No. 2023-139196, filed August 29, 2023. The content of the above Japanese patent application is incorporated herein by reference in its entirety.

## Claims

1. A power reception device for wirelessly receiving power from a power transmission device, the power reception device comprising:
a detection means configured to detect a near field communication (NFC) tag;
a reading means configured to read one or more pieces of tag data from the detected NFC tag; and
a processing means configured to execute a process by selecting a processing method related to the one or more pieces of tag data in accordance with whether or not the reading means has read the tag data in a state in which the power reception device can receive the power from the power transmission device.

2. The power reception device according to claim 1, wherein the processing means confirms whether or not power transmission permission tag data indicating that power transmission is permitted is present in the one or more pieces of tag data when the reading means has read the tag data in the state in which the power reception device can receive the power.

3. The power reception device according to claim 2, wherein the processing means decides power information indicating required power to be transmitted by the power transmission device in negotiation with the power transmission device based on the power transmission permission tag data in a case where the power transmission permission tag data is present.

4. The power reception device according to claim 3, further comprising a calculation means configured to calculate a receivable power value based on an operation state of the power reception device,
wherein the processing means decides the power information based on the power transmission permission tag data and the receivable power value.

5. The power reception device according to claim 2, wherein the processing means decides power information about power limited to a predetermined value or less in negotiation with the power transmission device in a case where the power transmission permission tag data is absent.

6. The power reception device according to claim 3, wherein the processing means further performs a process related to one or more pieces of tag data other than the power transmission permission tag data.

7. The power reception device according to claim 6, wherein the processing means performs a process related to tag data of a specific number in the one or more pieces of tag data other than the power transmission permission tag data.

8. The power reception device according to claim 7, wherein the tag data of the specific number is first tag data.

9. The power reception device according to claim 6, wherein the processing means performs a sequential process in relation to a plurality of pieces of tag data other than the power transmission permission tag data or a process related to one or more pieces of tag data selected from among the plurality of pieces of tag data.

10. The power reception device according to claim 2, wherein the power transmission permission tag data includes a power value at which the NFC tag permits power transmission.

11. The power reception device according to claim 1, wherein the reading means reads one or more pieces of tag data of each of all NFC tags when the detection means detects a plurality of NFC tags.

12. The power reception device according to claim 11, wherein the processing means performs a process related to each of the one or more pieces of tag data.

13. The power reception device according to claim 11, wherein the processing means confirms whether or not there is power transmission permission tag data indicating that power transmission is permitted in the one or more pieces of tag data read from all the NFC tags.

14. The power reception device according to claim 13, further comprising a calculation means configured to calculate a receivable power value based on an operation state of the power reception device,
wherein, in a case where all the NFC tags have the power transmission permission tag data, the processing means decides power information indicating required power to be transmitted by the power transmission device in negotiation with the power transmission device based on a minimum value of power values at which each of the NFC tags permits the power transmission and the receivable power value, wherein the minimum value and the receivable power value are included in the power transmission permission tag data.

15. The power reception device according to claim 13, wherein the processing means decides power information about power limited to a predetermined value or less in negotiation with the power transmission device in a case where at least one of all the NFC tags does not have the power transmission permission tag data.

16. The power reception device according to claim 13, wherein the processing means further performs a process related to one or more pieces of tag data other than the power transmission permission tag data.

17. The power reception device according to claim 16, wherein the processing means performs a process related to one or more pieces of tag data other than the power transmission permission tag data that is read from a specific NFC tag among all the NFC tags.

18. The power reception device according to claim 17, wherein the specific NFC tag is an NFC tag related to the power transmission device.

19. The power reception device according to claim 2 or 13, wherein the processing means prevents a process related to tag data other than the power transmission permission tag data from being performed.

20. The power reception device according to claim 1, wherein the processing means performs a process related to at least one piece of the read tag data when the tag data is read in a state in which the power reception device cannot receive the power from the power transmission device.

21. The power reception device according to claim 20, wherein the processing means performs a process related to tag data of a specific number.

22. A power transmission device for wirelessly transmitting power to a power reception device, the power transmission device comprising:
a detection means configured to detect a near field communication (NFC) tag;
a reading means configured to read one or more pieces of tag data from the detected NFC tag; and
a processing means configured to execute a process by selecting a processing method related to the one or more pieces of tag data in accordance with whether or not the reading means has read the tag data in a state in which the power reception device can receive the power from the power transmission device.

23. A method executed by a power reception device for wirelessly receiving power from a power transmission device, the method comprising:
a detection step of detecting a near field communication (NFC) tag;
a reading step of reading one or more pieces of tag data from the detected NFC tag; and
a processing step of executing a process by selecting a processing method related to the one or more pieces of tag data in accordance with whether or not the tag data has been read in the reading step in a state in which the power reception device can receive the power from the power transmission device.

24. A method executed by a power transmission device for wirelessly transmitting power to a power reception device, the method comprising:
a detection step of detecting a near field communication (NFC) tag;
a reading step of reading one or more pieces of tag data from the detected NFC tag; and
a processing step of executing a process by selecting a processing method related to the one or more pieces of tag data **in** accordance with whether or not the tag data has been read **in** the reading step **in** a state **in** which the power reception device can receive the power from the power transmission device.

25. A program causing a computer to execute the method according to claim 23.

26. A program causing a computer to execute the method according to claim 24.
